# EUROPÄISCHE PATENTSCHRIFT

(11) **EP 0 588 007 B1**
(45) Veröffentlichungstag und Bekanntmachung des Hinweises auf die Patenterteilung: **11.09.1996**
(21) Anmeldenummer: 93111095.1
(22) Anmeldetag: 10.07.1993
(51) Int. Cl.: A01N 43/82, C09D 5/14

(54) **Verwendung von Thiadiazol-Verbindungen als Antifouling-Wirkstoff**
Use of thiadiazoles as antifouling agent
Utilisation des thiadiazoles comme agent antifouling

(30) Priorität: 16.09.1992 DE 4230955
(43) Veröffentlichungstag der Anmeldung: 23.03.1994
(73) Patentinhaber: Witco GmbH, D-59180 Bergkamen (DE)
(72) Erfinder: Gerigk, Ursula, Dr. Dipl.-Chem., D-45711 Datteln (DE); Ventur, Dirk, Dr. Dipl.-Chem., D-44801 Bochum (DE)

(56) Entgegenhaltungen:
- EP-A- 0 534 219
- DE-A- 2 142 913
- DE-A- 2 242 187
- US-A- 3 597 426
- CHEMICAL PATENTS INDEX, DOCUMENTATION ABSTRACTS JOURNAL Week 9033, 10. Oktober 1990 Derwent Publications Ltd., London, GB; AN 90-249861 & JP-A-2 173 165 (NIPPON SODA) 4. Juli 1990
- CHEMICAL ABSTRACTS, VOL. 114, no. 2; 14. Januar 1991 Columbus Ohio USA abstract no. 8346k

## Beschreibung

Die Erfindung betrifft den Einsatz von Thiadiazol-Verbindungen als Antifouling-Wirkstoff zum Schutz von Oberflächen gegen den Bewuchs durch Meeresorganismen.

Oberflächen, die für den Unterwassereinsatz vorgesehen sind, z.B. Schiffe, Boote, Netze oder Off-shore-Konstruktionen wie Bohrinseln oder Pipelines müssen gegen den Bewuchs durch Meeresorganismen wie z.B. Algen, Seegras, Muscheln, Röhrenwürmer, Schwämme etc. geschützt werden.

Ein Bewuchs der Flächen führt zu einer Erhöhung der Unterhaltungs- und Wartungskosten. Insbesondere bei Schiffen erhöht sich durch den Bewuchs des Schiffsrumpfes der Reibungswiderstand im Wasser; dies führt zu einer deutlichen Erniedrigung der Geschwindigkeit bzw. zu einem Mehrverbrauch an Treibstoff. In vielen Fällen werden daher diese Oberflächen durch Einsatz eines geeigneten Antifoulinganstriches geschützt.

Der Antifoulinganstrich besteht meistens aus einem polymeren Bindemittel, einem oder mehreren Bioziden, die im Kontakt mit Wasser aus dem Anstrichsystem ausgelaugt werden, und Pigmenten.

Als polymeres Bindemittel werden z.B. Poly(meth)acrylate, Polyester, Polyurethane, Epoxidverbindungen, Chlorkautschuk, Harze oder andere, filmbildende Systeme eingesetzt.

Eine Vielzahl verschiedener Biozide werden in diesen Antifoulingfarben verwendet. Am häufigsten werden hierbei Kupfer(I)-Salze wie z.B. Kupfer(I)-oxid oder organische Zinnverbindungen z.B. Tri-butylzinnmethacrylat benutzt.

Da der Einsatz insbesondere von Kupferverbindungen mit technischen Nachteilen verbunden ist, besteht ein Bedarf nach schwermetallfreien, alternativen Verbindungen für den bioziden Einsatz in Farbsystemen.

Die Herstellung neuer Diazol-Verbindungen der allgemeinen Formel I 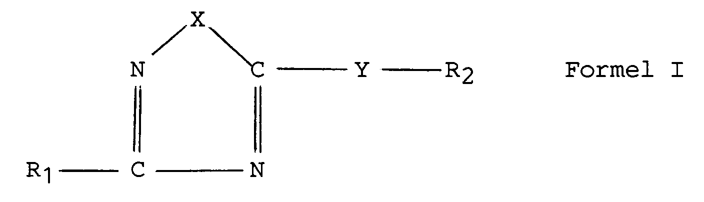 und deren Verwendung in pestiziden Präparaten und zur Bekämpfung von Nematoden und Fungi ist in der DE-OS 2 142 913 beschrieben.

Eine spezielle Verbindung der allgemeinen Formel I, das 3-(4-Bromphenyl)-5-methylsulfonyl-1,2,4-thiadiazol, ein Verfahren zu seiner Herstellung sowie seine Verwendung als Fungizid ist in der EP-A-0 534 219 genannt.

In der DE-OS 22 42 187 werden Verbindungen der allgemeinen Formel I beschrieben sowie deren Verwendung in bakteriziden und fungiziden Wirkstoffen.

In der JP-A 2 173 165 werden Antifoulingwirkstoffe, unter anderem auch eine Thiadiazol- und eine Imino-thiadiazolin-Verbindung, genannt. Diese Verbindungen fallen nicht unter der erfindungsgemäß verwendeten Verbindungen der allgemeinen Formel II.

Es wurde nun überraschend gefunden, daß bestimmte Thiadiazol-Verbindungen der allgemeinen Formel II 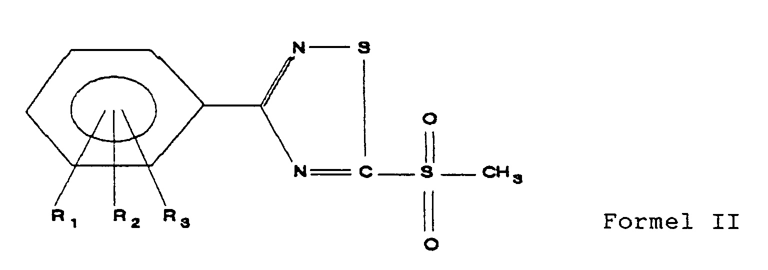 mit
- R₁, R₂, R₃ =: - Wasserstoff
- Alkylgruppen mit 1 - 4 Kohlenstoffatomen
- substituierte Alkylgruppen mit 1 - 4 Kohlenstoffatomen, die ggf. mit Halogen, einer Alkoxy-, Carboxy-, Hydroxy- oder Nitrogruppe substituiert sind
- CN, CF₃, Halogen, NO₂,
- COOR mit R= H, Alkylgruppen mit 1 - 4 Kohlenstoffatomen
eine sehr gute Wirkung gegen Meeresorganismen, die an dem Bewuchs von Flächen im marinen Bereich beteiligt sind, aufweisen.

Die Erfindung betrifft demnach die Verwendung der Verbindungen der allgemeinen Formel II als Antifouling-Wirkstoff.

Bevorzugt werden dabei Verbindungen verwendet, in denen mindestens eine der Gruppen R₁, R₂ und R₃ Wasserstoff, -CN, -NO₂ oder Halogen ist. Bei den substituierten Alkylgruppen sind Halogen- und NO₂-substituierte bevorzugt.

Die Verbindungen werden erfindungsgemäß zweckmäßig in Form von Zubereitungen wie Lösungen, Emulsionen, Dispersionen mit und ohne Bindemittel oder mit festen Trägerstoffen bzw. Verdünnungsmitteln und gegebenenfalls mit Zusatz von Netz-, Haft-, Emulgier- und Dispergierhilfsmitteln oder durch Mischung mit Polymeren oder durch Einpolymerisation angewandt.

Geeignete Lösemittel sind z.B. Methanol, Aceton, aliphatische und aromatische Kohlenwasserstoffe wie Hexan, Toluol oder Xylol.

Der Wirkstoffgehalt der erfindungsgemäß verwendeten Verbindungen in den oberflächenschützenden Systemen liegt zwischen 0.1 und 25 Gewichtsprozent, vorzugsweise im Bereich 5 bis 15 %.

Zur Herstellung von Farbsystemen wird das polymere Bindemittelsystem mit Pigmenten und gegebenenfalls mit anderen Bioziden in einem geeigneten Lösungsmittel gemischt.

Als Pigmente werden hierbei vorzugsweise schwer wasserlösliche Pigmente wie z.B. Zinkoxid oder Zink-bis(dimethyldithiocarbamat) mit zusätzlichen bioziden Eigenschaften oder nichtbiozide, unlösliche Pigmente wie z.B. Titandioxid oder Eisenoxid verwendet. Die wasserunlöslichen Pigmente verzögern hierbei aufgrund ihrer Eigenschaften die schnelle Auflösung des Farbsystems.

Die eingesetzten Konzentrationen der unlöslichen Pigmente können bis 40 Gewichtsprozent der Gesamtpigmentmenge betragen - vorzugsweise aber weniger als 20 Gewichtsprozent.

Das Verhältnis des polymeren Bindemittels zur gesamten Pigmentkonzentration sollte derart sein, daß die Pigmentvolumenkonzentration über 25 % im Trockenfilm liegt - vorzugsweise liegt sie bei 35 - 50 %.

Geeignete Lösungsmittel für die fertigen Farben sind z.B. aliphatische und aromatische Kohlenwasserstoffe wie z.B. Toluol, Xylol, Heptan, aber auch Alkohole wie Butanol, Ketone wie Methylisobutylketon oder Ester wie Ethyl- oder Butylacetat, Erdöl-Kohlenwasserstoff-Fraktionen wie z.B. Ligroin, Benzin, oder auch Wasser, Dimethylformamid oder Mischungen der aufgeführten Lösungsmittel untereinander.

Die Farbsysteme können fernerhin einen Weichmacher wie z.B. Diisooctylphthalat, Tributylphosphat, Polyvinylethylether oder ein substituiertes Sulfonamid wie z.B. N-Ethyl-p-toluolsulfonamid sowie andere Hilfs-, Dispergier-, Antiabsetz-, Füll-, Beschleunigungs-, Verzögerungs- und Färbemittel oder Sikkative wie z.B. Kalk, Bentone, Kobaltnaphthenat oder Blaupigmente enthalten.

Zur Verbreiterung des Wirkungsspektrum lassen sich die erfindungsgemäßen Verbindungen mit anderen bioziden Wirkstoffen kombinieren wie z.B.
2,4,5,6-Tetrachlorisophthalonitril
2-Methylthio-4-tert.-butylamino-6-cyclopropylamino-s-triazin
2-Thiocyanomethylthiobenzothiazol
3-(3,4-Dichlorphenyl)-1,1,-dimethylharnstoff
3-Jodo-2-propynyl-butylcarbamat
Dibromsuccinate
Diphenylamin
Isothiazolone
Zink- oder Mangan-ethylenbisdithiocarbamate
Zinkpyrithion

### Herstellungsbeispiele

### Beispiel I:

### Synthese von 5-Methylsulfonyl-3-phenyl-1,2,4-thiadiazol

75 g Benzamidiniumchlorid, 257 g Natriummethylat (30% in Methanol), 92 g Kohlenstoffdisulfid, 19 g Schwefel und 450 g Methanol werden 6 Stunden am Rückfluß gekocht. Der Überschuß an Schwefelkohlenstoff wird über eine Destillationsbrücke abdestilliert und das Methanol am Rotationsverdampfer abgezogen. Der Rückstand wird in heißem Wasser gelöst und abfiltriert. Das Filtrat mit Salzsäure auf pH 3 angesäuert, das ausgefallene Produkt abfiltriert, in Kalumcarbonat-Lösung aufgenommen, filtriert und erneut mit Salzsäure ausgefällt.

52 g der Thiadiazol-Verbindung 5-Thio-3-phenyl-1,2,4-thiadiazol , 18.5 g Kaliumcarbonat, 54 g Methyliodid und 270 ml Aceton wurden 3 Stunden am Rückfluß gekocht, in 1.5 l Wasser eingerührt und anschließend der weiße Niederschlag abfiltriert. Der Niederschlag wird aus Ethylether umkristallisiert.

20 g 5-Methylthio-3-phenyl-1,2,4-thiadiazol werden in 250 ml Essigsäure gelöst und mit 50 ml 30% Wasserstoffperoxid-Lösung versetzt. Nach 72 Stunden wird der Niederschlag von 5-Methylsulfonyl-3-phenyl-1,2,4-thiadiazol abfiltriert und mit Wasser und Hexan gewaschen.

### Beispiel II:

### Synthese von 5-Methylsulfonyl-3-p-chlorphenyl-1,2,4-thiadiazol

90.2 g p-Chlorbenzamidiniumchlorid, 257 g Natriummethylat (30 % in Methanol), 92 g Kohlenstoffdisulfid, 19 g Schwefel und 450 g Methanol werden 7 Stunden am Rückfluß gekocht. Die weitere Aufarbeitung verläuft analog dem ersten Beispiel.

65 g der Thiadiazol-Verbindung 5-Thio-3-p-chlorphenyl-1,2,4-thiadiazol, 19.2 g Kaliumcarbonat, 56.1 g Methyliodid und 280 ml Aceton werden 4 h am Rückfluß gekocht, in 1.6 l Wasser eingerührt und anschließend wird der weiße Niederschlag abfiltriert. Der Niederschlag wird aus Diethylether umkristallisiert.

25 g 5-Methylthio-3-p-chlorphenyl-1,2,4-thiadiazol werden in 260 ml Essigsäure gelöst und mit 52 ml 30 % Wasserstoffperoxid-Lösung versetzt. Nach 72 Stunden wird der Niederschlag von 5-Methylsulfonyl-3-p-chlorphenyl-1,2,4-thiadiazol abfiltriert und mit Wasser und Hexan gewaschen.

### Beispiel III:

### Synthese von 5-Methylsulfonyl-3-p-nitrophenyl-1,2,4-thiadiazol

94.8 g p-Nitrobenzamidiniumchlorid, 257 g Natriummethylat (30 % in Methanol), 92 g Kohlenstoffdisulfid, 19 g Schwefel und 450 g Methanol werden 7 Stunden am Rückfluß gekocht.

Die weitere Aufarbeitung verläuft analog dem ersten Beispiel.

63.5 g der Thiadiazol-Verbindung 5-Thio-3-p-nitrophenyl-1,2,4-thiadiazol, 17.9 g Kaliumcarbonat, 52.2 g Methyliodid und 260 ml Aceton werden 4 h am Rückfluß gekocht, in 1.4 l Wasser eingerührt und anschließend wird der weiße Niederschlag abfiltriert. Der Niederschlag wird aus Diethylether umkristallisiert.

19 g 5-Methylthio-3-p-nitrophenyl-1,2,4-thiadiazol werden in 237.5 ml Essigsäure gelöst und mit 47.5 ml 30 % Wasserstoffperoxid-Lösung versetzt. Nach 72 Stunden wird der Niederschlag von 5-Methylsulfonyl-3-p-nitrophenyl-1,2,4-thiadiazol abfiltriert und mit Wasser und Hexan gewaschen.

### Beispiel IV:

### Synthese von 5-Methylsulfonyl-3-p-tolyl-1,2,4-thiadiazol

81.4 g p-Methylbenzamidiniumchlorid, 257 g Natriummethylat (30 % in Methanol), 92 g Kohlenstoffdisulfid, 19 g Schwefel und 450 g Methanol werden 5.5 Stunden am Rückfluß gekocht. Die weitere Aufarbeitung verläuft analog dem ersten Beispiel.

58.3 g der Thiadiazol-Verbindung 5-Thio-3-p-tolyl-1,2,4-thiadiazol, 19.1 g Kaliumcarbonat, 55.8 g Methyliodid und 280 ml Aceton werden 4 h am Rückfluß gekocht, in 1.55 l Wasser eingerührt und anschließend wird der weiße Niederschlag abfiltriert. Der Niederschlag wird aus Diethylether umkristallisiert.

21.7 g 5-Methylthio-3-p-tolyl-1,2,4-thiadiazol werden in 250 ml Essigsäure gelöst und mit 50 ml 30 % Wasserstoffperoxid-Lösung versetzt. Nach 72 Stunden wird der Niederschlag von 5-Methylsulfonyl-3-p-tolyl-1,2,4-thiadiazol abfiltriert und mit Wasser und Hexan gewaschen.

### Beispiel V:

### Synthese von 5-Methylsulfonyl-3-(2,4-dichlor)phenyl-1,2,4-thiadiazol

105.2 g 2,4-Dichlorbenzamidiniumchlorid, 257 g Natriummethylat (30 % in Methanol), 92 g Kohlenstoffdisulfid, 19 g Schwefel und 450 g Methanol werden 7 Stunden am Rückfluß gekocht. Die weitere Aufarbeitung verläuft analog dem ersten Beispiel.

73 g der Thiadiazol-Verbindung 5-Thio-3-(2,4-dichlor)phenyl-1,2,4-thiadiazol, 18.5 g Kaliumcarbonat, 54 g Methyliodid und 270 ml Aceton werden 4 h am Rückfluß gekocht, in 1.5 l Wasser eingerührt und anschließend wird der weiße Niederschlag abfiltriert. Der Niederschlag wird aus Diethylether umkristallisiert.

25 g 5-Methylthio-3-p-(2,4-dichlor)phenyl-1,2,4-thiadiazol werden in 220 ml Essigsäure gelöst und mit 44.6 ml 30 % Wasserstoffperoxid-Lösung versetzt. Nach 72 Stunden wird der Niederschlag von 5-Methylsulfonyl-3-p-(2,4-dichlor)phenyl-1,2,4-thiadiazol abfiltriert und mit Wasser und Hexan gewaschen.

### Formulierungsbeispiele

### Beispiel 1 - 3

Unterschiedliche Mengen an Methacrylsäure, Methacrylsäuremethylester und Acrylsäurebutylester (s. Tabelle 1) wurden 4 Stunden bei 70 - 80°C in n-Butanol unter Stickstoff mit α,α'-Azoisobutyronitril bzw. Dibenzoylperoxid copolymerisiert. Die folgende Tabelle zeigt exemplarisch einige Beispiele:

**Tabelle 1**

| | Methacrylsäure [ g ] | Methylmethacrylat [ g ] | Butylacrylat [ g ] |
|---|---|---|---|
| Polymer a | 39.3 | 138.6 | 122.1 |
| Polymer b | 68.7 | 107.7 | 123.6 |
| Polymer c | 74.1 | 101.7 | 124.2 |

122 g des obigen Polymeren a, b oder c wurden mit 56 g Bentone 38 (Geliermittel auf Basis Montmorillonit-Erde, 6% in Xylol, Fa. Titangesellschaft), 10.4 g Talk, 4.6 g Titandioxid RN 57 (Fa. Bayer), 0.8 g Ultramarinblau L 6294 (Farbpigment, Fa. BASF) und 12.3 g der 5-Methylsulfonyl-3-phenyl-1,2,4-thiadiazol sowie 40 g Xylol eine Stunde lang vermahlen (Beispiel 1 - 3).

### Beispiel 4

Ein Antifoulinganstrich auf Epoxidharzbasis wurde durch Mischen der beiden Komponenten A: EUREPOX^{(R)} 7001 (Warenzeichen der SCHERING AG) (17.2 Gew.-%), Titandioxid (38.6 Gew.-%), Tributylphosphat ( 2.6 Gew.-%), 5-Methylsulfonyl-3-phenyl-1,2,4-thiadiazol (11.6 Gew.-%), Xylol (24.0 Gew.-%), n-Butanol (6.0 Gew.-%) und Komponente B: EUREDUR^{(R)} 423 (Warenzeichen der SCHERING AG) (14.5 Gew.-%) dargestellt.

### Beispiel 5

Ein Antifoulinganstrich auf Chlorkautschukbasis wurde durch Mischen und Vermahlung von 14.3 Gew.% Pergut S 20 (mittelviskoser, chlorierter Kautschuk der Fa. Bayer AG), 7.1 Gew.% Witachlor 544 (Chlorparaffin mit 44% Chlorgehalt, Fa. Dynamit Nobel AG), 5-Methylsulfonyl-3-phenyl-1,2,4-thiadiazol (12.9 Gew.-%), Titandioxid Rutil (23.6 Gew.-%), Kupferthiocyanat 6.4 Gew.-% und Xylol (35.7 Gew.-%) dargestellt.
- EUREPOX^{R} 7001 =: festes Epoxidharz auf Basis von Bisphenol-A mit einem Epoxidwert (DIN 53188) von 0,195 - 0,225.
- EUREDUR^{R} 423 =: Polyaminoamid-/Epoxidharz-Addukt in Xylol: n-BuOH 4 : 1 auf Basis von dimerer Fettsäure, Triethylentetramin und einem Epoxidharz auf Basis von Bisphenol-A, mit einer Aminzahl von 125 - 140.

### Beispiel 6

Ein Antifoulinganstrich auf Vinylharzbasis wurde durch Abmischung und anschließender Vermahlung von 9.8 Gew.% Vinylite VYHH , Kolophonium (9.8 Gew.-%), 5-Methylsulfonyl-3-phenyl-1,2,4-thiadiazol (12.2 Gew.%), 10%-Lösung von Bentone 27 in Xylol (10.1 Gew.%) Xylol (7.8 Gew.%), Methylisobutylketon (30.1 Gew.%), Titandioxid (20.2 Gew.-%) dargestellt.

### Beispiel 7 - 9

122 g des obigen Polymeren a,b oder c wurden mit 56 g Bentone 38, 10.4 g Talk, 4.6 g Titandioxid, 0.8 g Ultramarinblau L 6294 und 12.3 g der 5-Methylsulfonyl-3-p-chlorphenyl-1,2,4-thiadiazol sowie 40 g Xylol eine Stunde lang vermahlen (Beispiel 7-9).

### Beispiel 10

Ein Antifoulinganstrich auf Epoxidharzbasis wurde durch Mischen der beiden Komponenten A: Eurepox^{(R)} 7001 (17.2 Gew.-%), Titandioxid (38.6 Gew.-%), Triburylphosphat ( 2.6 Gew.-%), 5-Methylsulfonyl-3-p-nitrophenyl-1,2,4-thiadiazol (11.6 Gew.-%), Xylol (24.0 Gew.-%), n-Butanol (6.0 Gew.-%) und Komponente B: EUREDUR^{(R)} 423 (14.5 Gew.-%) dargestellt.

### Beispiel 11

Ein Antifoulinganstrich auf Chlorkautschukbasis wurde durch Mischen und Vermahlung von 14.3 Gew.% Pergut S 20, 7.1 Gew.% Witachlor 544, 5-Methylsulfonyl-3-p-tolyl-1,2,4-thiadiazol (12.9 Gew.-%), Titandioxid (23.6 Gew.-%), Kupferthiocyanat 6.4 Gew.-% und Xylol (35.7 Gew.-%) dargestellt.

### Beispiel 12

Ein Antifoulinganstrich auf Vinylharzbais wurde durch Abmischung und anschließender Vermahlung von 9.8 Gew.% Vinylite VYHH, Kolophonium (9.8 Gew.-%), 5-Methylsulfonyl-3-(2,4-dichlor)phenyl-1,2,4-thiadiazol (12.2 Gew.%), 10%-Lösung von Bentone 27 in Xylol (10.1 Gew.%), Xylol (7.8 Gew.%), Methylisobutylketon (30.1 Gew.%), Titandioxid (20.2 Gew.-%) dargestellt.

### Beispiel 13

61 g eines Copolymeren (13 Teile Methacrylsäure, 47 Teile Methylmethacrylat, 40 Teile Butylacrylat) wurden mit 28 g Bentone 38, 5.2 g Talk, 2.3 g Titandioxid, 0.4 g Blaupigment, 6.2 g Zinkoxid und 20 g Xylol gemischt und zwei Stunden lang vermahlen.

### Beispiel 14

61 g eines Copolymeren (25 Teile Methacrylsäure, 35 Teile Methylmethacrylat, 40 Teile Butylacrylat) wurden mit 28 g Bentone 38 (6% in Xylol), 5.2 g Talk, 2.3 g Titandioxid, 0.4 g Ultramarinblau L 6294 und 6.2 g Zinkoxid sowie 20 g Xylol eine Stunde lang vermahlen.

### Beispiel 15

### Unbehandelte PVC-Platte

Die Wirksamkeit der erfindungsgemäßen Thiadiazol-Typen gegenüber Meeresorganismen wurde durch Auslagerungsversuche sowohl im Mittelmeer als auch in der Nordsee ermittelt.

Zu diesem Zweck wurden Testplatten aus Polyvinylchlorid (10 x 15 x 0.4cm) mit Antifoulinganstrichen versehen. Dies erfolgte nach folgendem Ablauf:

Die PVC-Platten werden entfettet und anschließend zweimal mit der Antifoulingfarbe gestrichen und 48 h getrocknet. Die Filmdicke liegt im Trockenfilm dann bei 100 - 150 µm. Die PVC-Platten werden in einen Kunststoffrahmen gespannt und über einen Zeitraum von 15 Monaten ausgelagert. Die nachfolgende Tabelle zeigt deutlich, daß die Testplatten mit den erfindungsgemäßen Verbindungen in diesem Zeitraum frei von tierischem oder pflanzlichen Bewuchs waren.

Die Testplatten ohne den erfindungsgemäßen Verbindungen zeigten einen starken Bewuchs durch Algen, Balaniden und Muscheln.

Die Beispiele 13, 14 und 15 dienten in den Auslagerungsversuchen als Kontrolle.

**Tabelle 2**

| | 6 Monate | 12 Monate | 15 Monate |
|---|---|---|---|
| Beispiel 1 | 0 | 0 | 0 |
| Beispiel 2 | 0 | 0 | 0 |
| Beispiel 3 | 0 | 0 | 0 |
| Beispiel 4 | 0 | 0 - 1 | 1 |
| Beispiel 5 | 0 | 0 | 0 |
| Beispiel 6 | 0 | 0 | 0 - 1 |
| Beispiel 7 | 0 | 0 | 0 - 1 |
| Beispiel 8 | 0 | 0 | 0 - 1 |
| Beispiel 9 | 0 | 0 | 0 - 1 |
| Beispiel 10 | 0 | 1 | 1 - 2 |
| Beispiel 11 | 0 | 1 | 1 - 2 |
| Beispiel 12 | 0 | 0 - 1 | 1 |
| Beispiel 13 | 5 | 10 | 10 |
| Beispiel 14 | 7 | 10 | 10 |
| Beispiel 15 | 10 | 10 | 10 |
| 0 = kein Bewuchs 5 = 50% Bewuchs 10 = kompletter Bewuchs | | | |

## Patentansprüche

1. Verwendung von Thiadiazol-Verbindungen der allgemeinen Formel 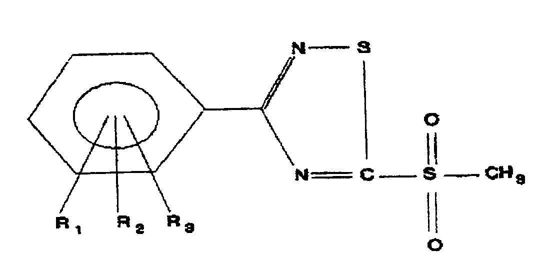 mit
R₁, R₂, R₃ = - Wasserstoff
- Alkylgruppen mit 1 - 4 Kohlenstoffatomen
- substituierte Alkylgruppen mit 1 - 4 Kohlenstoffatomen, die ggf. mit Halogen,
einer Alkoxy-, Carboxy-, Hydroxy- oder Nitrogruppe substituiert sind
- CN, CF₃, Halogen, NO₂,
- COOR mit R= H, Alkylgruppen mit 1 - 4 Kohlenstoffatomen
als Antifouling-Wirkstoff.

2. Verwendung von Thiadiazol-Verbindungen gemäß Anspruch 1, wobei R₁, R₂ und R₃ Wasserstoff, -CN, -NO₂ oder Halogen bedeuten.

3. Verwendung von Thiadiazol-Verbindungen gemäß Anspruch 1, wobei R₁, R₂ und R₃ eine halogen- oder NO₂-substituierte Alkylgruppe bedeuten.

4. Verwendung von 5-Methylsulfonyl-3-phenyl-1,2,4-thiadiazol gemäß den Ansprüchen 1 und 2.

## Claims

1. Use of thiadiazole compounds of the general formula 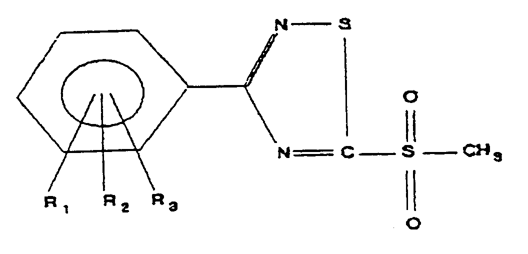 wherein R₁, R₂, R₃ are independently
- hydrogen,
- alkyl groups having from 1 to 4 carbon atoms,
- substituted alkyl groups having from 1 to 4 carbon atoms that are optionally substituted by halogen, alkoxy, carboxy, hydroxy or nitro,
- CN, CF₃, halogen, NO₂,
- COOR in which R=H or an alkyl group having from 1 to 4 carbon atoms,
as anti-fouling active ingredients.

2. Use of thiadiazole compounds according to claim 1, wherein R₁, R₂ and R₃ represent hydrogen, -CN, -NO₂ or halogen.

3. Use of thiadiazole compounds according to claim 1, wherein R₁, R₂ and R₃ represent a halo- or NO₂-substituted alkyl group.

4. Use of 5-methylsulphonyl-3-phenyl-1,2,4-thiadiazole according to claims 1 and 2.

## Revendications

1. Utilisation de composés de thiadiazole de formule générale 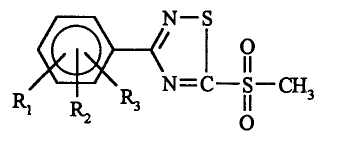 dans laquelle R₁, R₂, R₃ représentent
- des atomes d'hydrogène,
- des groupes alkyle de 1 à 4 atomes de carbone,
- des groupes alkyle de 1 à 4 atomes de carbone substitués, qui sont substitués éventuellement par halogène ou par un groupe alcoxy, carboxy, hydroxy ou nitro,
- CN, CF₃, halogène, NO₂,
- COOR, où R représente H ou un groupe alkyle de 1 à 4 atomes de carbone, comme agents antisalissures.

2. Utilisation de composés de thiadiazole selon la revendication 1 où R₁, R₂ et R₃ représentent l'hydrogène, -CN, -NO₂ ou des halogènes.

3. Utilisation de composés de thiadiazole selon la revendication 1 où R₁, R₂ et R₃ représentent des groupes alkyle substitués par halogène ou NO₂.

4. Utilisation du 5-méthylsulfonyl-3-phényl-1,2,4-thiadiazole selon les revendications 1 et 2.
